(19) Europäisches Patentamt
European Patent Office
Office européen des brevets

(11) Publication number : **0 630 910 A1**

(12) # EUROPEAN PATENT APPLICATION

(21) Application number : **94304654.0**

(22) Date of filing : **27.06.94**

(51) Int. Cl.5 : **C08F 2/40,** C08F 10/00, C08F 4/60

(30) Priority : **28.06.93 US 83912**

(43) Date of publication of application :
**28.12.94 Bulletin 94/52**

(84) Designated Contracting States :
**AT BE CH DE DK ES FR GB GR IE IT LI LU MC NL PT SE**

(71) Applicant : **UNION CARBIDE CHEMICALS & PLASTICS TECHNOLOGY CORPORATION**
**39 Old Ridgebury Road**
**Danbury, Connecticut 06817-0001 (US)**

(72) Inventor : **Brady III, Robert Converse**
**8 Sunset Place**
**Morristown, New Jersey 07960 (US)**
Inventor : **Karol, Frederick John**
**18 Hiland Drive**
**Belle Meade, New Jersey 08502 (US)**
Inventor : **Cann, Kevin Joseph**
**31 Montgomery Avenue**
**Rocky Hill, New Jersey 08553 (US)**

(74) Representative : **Allard, Susan Joyce et al**
**BOULT, WADE & TENNANT**
**27 Furnival Street**
**London EC4A 1PQ (GB)**

(54) **Use of Lewis Bases for activity reduction in metallocene catalyzed olefin polymerization reactions.**

(57) Lewis Bases are used to control the activity of an olefin polymerization reaction and, if need be, to substantially terminate the entire reaction completely. Such activity reduction or termination of the reaction by the one or more Lewis Bases can be completely reversed by the simple introduction of additional co-catalyst. The use of such Lewis Bases to control static is also disclosed.



Jouve, 18, rue Saint-Denis, 75001 PARIS

## Field of the Invention

This invention generally pertains to the field of olefin polymerization reactions, including gas or liquid phase reactions. More particularly, the present invention is directed to the use of Lewis Bases to terminate the reaction, especially in an emergency situation. Significantly, such activity termination by the one or more Lewis Bases can be reversed by the simple introduction of additional co-catalyst. The use of such Lewis Bases to control electrostatic charge is also disclosed.

## Background of the Invention

In olefin polymerization processes which are exothermic, there is a need to be able to terminate the reaction rapidly and effectively in an emergency situation, while providing the ability to effectively and economically restart the reaction without difficulty.

It is known that the polymerization of monoolefins, particularly alpha-olefins, such as propylene, in slurry or bulk polymerizations using the well known Ziegler-Natta catalyst systems can be terminated by the addition of substances such as alcohols, ketones, ethers, aldehydes, carboxylic acids, phenols, water, oxygen and carbon oxides. It is also known that the polymerization of olefins, such as ethylene or propylene in gas phase processes also using such Ziegler-Natta catalyst systems, can be terminated by the addition of carbon oxides. See, for example, U.S. Patent No. 4,326,048. It is also known that the polymerization of olefins, such as ethylene or propylene in gas phase processes also using such Ziegler-Natta catalyst systems can be controlled by the addition of activity retarders. See, for example, U.S. Patent No. 5,066,736.

In U.S. Patent No. 4,326,048, carbon oxides are used to terminate a gas phase alpha-olefin polymerization reaction that utilizes a Ziegler-Natta catalyst system comprised of a titanium halide and an aluminum alkyl. While such termination of the reaction is reversible, it is not efficient or economical. The termination cannot be reversed by the simple addition of more aluminum alkyl. In order to restart the reaction, the carbon oxides must be removed by venting and flushing the entire reactor system. It is expensive and difficult to remove the carbon oxides from the non-polymerized monomer because the volatility of the carbon oxide is similar to the volatility of the typical monomer used. Undesirably, therefore, the unreacted monomer is typically removed with the carbon oxides. This results in a loss of valuable product by the loss of such precursor monomer and, still further, results in considerable downtime of the reactor system.

Another process for deactivating a polymerization reaction is taught in U.S. Patent No. 4,551,509. In that patent, the Ziegler-Natta catalyst system to be deactivated uses a compound of a transition metal of Groups IVA and VIA of the Periodic Table and an organometallic compound of a metal of Groups I to III of the Periodic Table. A relatively large quantity of polyalkylene glycol is introduced in the reactor to deactivate the catalyst. This termination of the reaction, however, is not reversible.

Recently, there has been much written about a new class of olefin polymerization catalyst systems, namely, the catalytically active reaction product of one or more metallocenes with aluminoxane. While the metallocenes may contain a transition metal, just as a Ziegler-Natta catalyst, that is where any similarity between the two catalyst systems ends.

Ziegler-Natta type catalysts for the polymerization of olefins comprise a metal halide activated to a catalyst species by reaction with a metal alkyl cocatalyst, particularly an aluminum alkyl cocatalyst. The activation of these traditional heterogeneous Ziegler-Natta catalysts generates a variety of different active sites. As a consequence of this non-uniformity of the active sites, these catalysts produce polymer products of broad molecular weight distribution.

In contrast, the metallocenes are cyclopentadienyl derivatives of a Group IIIB, IVB, VB, VIB or VIII metal of the Periodic Table and include mono, di and tricyclopentadienyls and their derivatives of the transition metals. The aluminoxanes comprise oligomeric linear and/or cyclic alkyl aluminoxanes which are well known in the art. The metallocene/aluminoxane catalyst systems, whether homogeneous or supported, generally possess higher activity than the Ziegler-Natta catalysts and are versatile in that they may be effectively used to produce a variety of polymer products including, among other things, atactic polypropylene and isotactic polypropylene. Moreover, the metallocene/aluminoxane catalyst system offers the ability of producing polymers with very narrow molecular weight distribution and a narrow compositional distribution.

We have found that there are yet other differences between the Ziegler-Natta type catalyst system and the metallocene/aluminoxane catalyst system. For example, whereas the activity of a titanium based (Group IVB) Ziegler-Natta type catalyst system, such as described in U.S. Patent No. 5,066,736, will generally decrease as temperature increases, the activity of a Group IVB metallocene/aluminoxane catalyst system does just the opposite. Its activity actually increases with increasing temperature.

Consequently, a need existed to find an agent that was capable of controlling the activity of a polymerization reaction which uses a metallocene/aluminoxane catalyst system and, if need be, completely terminate such reaction but do so in a completely reversible manner.

## Summary of the Invention

By virtue of the present invention, it has been found that Lewis Bases are capable of controlling the rate of an olefin polymerization reaction which uses a metallocene/aluminoxane catalyst system and, if need be, such reaction can be terminated by the use of such Lewis Bases.

As used herein, Lewis Bases are compounds with an available pair of electrons for bonding. The available pair of electrons on the Lewis Base is capable of forming a dative bond to either the metallocene or the aluminoxane. The metallocene•Lewis Base complex is inactive for olefin polymerization because the olefin is unable to compete with the Lewis Base for the metallocene active site. The equilibrium existing between the Lewis Base complexes shifts depending upon the reactant concentrations and other reaction conditions. This shift in equilibrium affects the overall olefin polymerization rate.

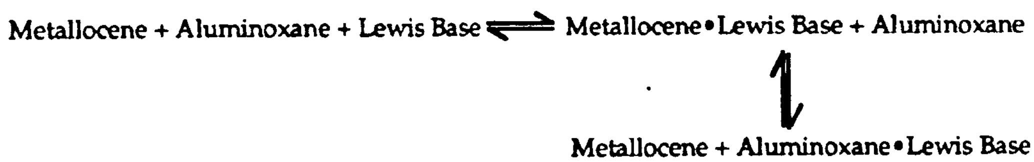


Unlike the reaction with most Lewis Bases, aluminoxanes do not form a dative bond with carbon monoxide. It is this feature, i.e., the availability of a pair of electrons on the Lewis Base capable of forming a dative bond to the aluminoxane, that allows the terminated reaction to be restarted and which differentiates the invention from that of U.S. Patent No. 4,326,048.

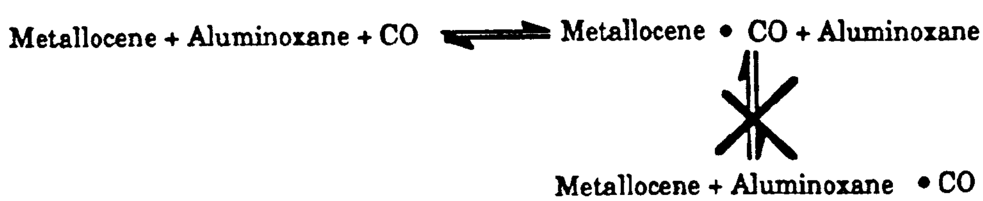


The Lewis Bases are meant to include alcohols, ketones, ethers, aldehydes, carboxylic acids, esters, carbonates, phosphines, phosphine oxides, phosphates, phosphites, amines, amides, nitriles, alkoxy silanes, aluminum alkoxides, water, oxygen, nitric oxides, and the like. In some cases, the Lewis base reacts with the aluminoxane to form a covalent bond. This reaction product is a Lewis Base and it is this Lewis Base reaction product that acts as the kill agent. Alcohols and ketones are examples of Lewis Bases that react with aluminoxanes. The reaction product is an aluminum alkoxide. The aluminum alkoxide product can form a metallocene complex and control the polymerization rate.

Significantly, we have found that when using Lewis Bases to terminate an olefin polymerization reaction using a metallocene/aluminoxane catalyst system, such termination of the reaction is fully reversible by simply adding additional aluminoxane to the reaction system. Surprisingly, this is in total contrast to the use of agents, which may be characterized as Lewis Bases, which are used as kill agents in an olefin polymerization reaction using a Ziegler-Natta catalyst system such as that described above in U.S. Patent No. 4,551,509 in which a relatively large quantity of polyalkylene glycol is used but where the termination of the polymerization reaction is not at all reversible.

Lewis Bases are also used to reduce sheeting during olefin polymerization by neutralizing electrostatic charge in the polymerization reactor as described in U. S. Patent No. 4,803,251. The causes for sheeting have been discussed extensively in the art. It is generally believed that static electricity generated in the fluid bed charges resin particles. When the charge on the particles reaches the level where the electrostatic forces trying to hold the charged particle near the reactor wall exceed the drag forces in the bed trying to move the particle away from the wall, a layer of catalyst containing, polymerizing resin particles forms a non-fluidized layer near the reactor wall. Heat removal from this layer is not sufficient to remove the heat of polymerization because the non-fluidized layer near the wall has less contact with the fluidizing gas than do particles in the fluidized

portion of the bed. The heat of polymerization increases the temperature of the non-fluidized layer near the reactor wall until the particles melt and fuse. At this point, other particles from the fluidized bed will stick to the fused layer and it will grow in size until it comes loose from the reactor wall. The separation of a dielectric from a conductor (the sheet from the reactor wall) is known to generate yet additional static electricity thus accelerating subsequent sheet formation.

Generally, if negative electrostatic charge is present at the site of possible sheet formation in the reactor, then a positive charge generating chemical additive may be added to the reactor to create and maintain a neutral electrostatic charge in the reactor to help prevent sheeting. Typically, such additives include alcohols, oxygen, nitric oxide, and the like. If a positive electrostatic charge is present, then a negative charge generating chemical additive may be added. Typically, such additives include ketones, and the like. The addition of a low concentration of the appropriate Lewis Base to the reaction will slightly reduce the activity of the metallocene/aluminoxane catalyst system, but will also neutralize electrostatic charge in the gas phase reactor. Depending upon the functional groups that are present on the Lewis Base being used, it is possible to drive the static charge toward positive or negative values. Lewis Bases having ketone functional group will generally provide a negative charge, whereas Lewis Bases having alcohols, oxygen, or nitric oxide type functionalities will typically provide a positive charge.

Accordingly, in one embodiment, the present invention is directed to a method for reversibly controlling the activity of an olefin polymerization reaction which uses the reaction product of a metallocene compound and aluminoxane as an olefin polymerization catalyst comprising the addition of Lewis Base to the reaction zone, preferably where such Lewis Base is selected from the group consisting of alcohols, ketones, ethers, aldehydes, carboxylic acids, esters, carbonates, phosphines, phosphine oxides, phosphates, phosphites, amines, amides, nitriles, alkoxy silanes, aluminum alkoxides, water, oxygen, nitric oxides, or combinations thereof.

In an alternative embodiment, the present invention is directed to a method for reversibly terminating an olefin polymerization reaction which uses the reaction product of a metallocene compound and aluminoxane as an olefin polymerization catalyst comprising the addition of an effective amount of Lewis Base to the reaction zone so as to substantially terminate the reaction. Lewis Base used to terminate an olefin polymerization reaction is selected from the same group as that used to control the activity of the olefin polymerization reaction.

In a further embodiment, the present invention is directed to a method for terminating and restarting an olefin polymerization reaction in which alpha-olefins are polymerized using the reaction product of a metallocene compound and aluminoxane as an olefin polymerization catalyst in a reaction zone comprising the steps of: (a) adding an effective amount of Lewis Base to the reaction zone to terminate the reaction; and then (b) introducing an effective amount of aluminoxane to the reaction zone to reinitiate the polymerization reaction.

## Detailed Description of the Invention

Gas phase reactions for the production of olefin polymers are well known in the art. Such gas phase reactions are typically carried out by fluidized bed, stirred or paddle-type reaction systems, and the like, as described in, for example, U.S. Patent Nos. 4,588,790, 3,256,263,3,625,932, British Patent Nos. 1,248,951, 1,248,952, 1,248,953, and the like. As used herein, a "polyolefin" is meant to include homopolymers, copolymers, and terpolymers of alpha-olefins and may optionally contain dienes, aromatic compounds with vinyl unsaturation and/or carbon monoxide.

Generally, the alpha-olefin monomers have from 2 to 12 carbon atoms and typically include, but are not limited to, ethylene, propylene, 1-butene, 1-pentene, 4-methyl-1-pentene, 1-hexene, styrene, and the like. Preferred dienes which may optionally be polymerized with the alpha-olefins are those which are non-conjugated. These non-conjugated diene monomers may be straight chain, branched chain or cyclic hydrocarbon dienes having from about 5 to about 15 carbon atoms. Dienes which are especially preferred include 1,4-hexadiene and 5-ethylidene-2-norbornene.

Preferred aromatic compounds having vinyl unsaturation which also may be optionally polymerized with the alpha-olefins include styrene and substituted styrene.

The metallocenes are organometallic compounds which are cyclopentadienyl derivatives of a Group IVB, VB, VIB or VIII metal of the Periodic Table and include mono, di and tricyclopentadienyls and their derivatives of the transition metals. Particularly desirable are metallocene complexes of a Group IVB and VB metal such as titanium, zirconium, hafnium and vanadium. One class of metallocenes which may be used in practicing methods in accordance with the present invention are represented by the general formula:

$$(C_5R_x)_yR'_z(C_5R_m)MQ_{n-y-1}$$

wherein:

M is a metal of from Groups IIIB to VIII of the Periodic Table of the Elements;

$(C_5R_x)$ and $(C_5R_m)$ are the same or different cyclopentadienyl or substituted cyclopentadienyl groups bonded to M;
R is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring;
R' is a $C_1$-$C_4$ substituted or unsubstituted alkylene radical, a dialkyl or diaryl germanium or silicon, or an alkyl or aryl phosphine or amine radical bridging two $(C_5R_x)$and $(C_5R_m)$ rings;
Q is a hydrocarbyl radical such as aryl, alkyl, alkenyl, alkylaryl, or aryl alkyl radical having from 1-20 carbon atoms, hydrocarboxy radical having from 1-20 carbon atoms or halogen and can be the same or different from each other;
z is 0 or 1;
y is 0, 1 or 2;
z is 0 when y is 0;
n is 0, 1, 2, 3, or 4 depending upon the valence state of M;
and n - y is $\geqq 1$.

Other metallocene polymerization catalysts which are suitable for use in the present invention correspond to the formula:

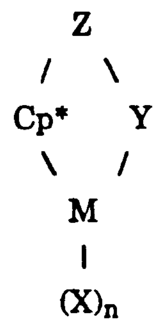

wherein:
M is a metal of Group IIIB to VIII or Lanthanide's of the Periodic Table of the Elements:
Cp* is a cyclopentadienyl or substitute cyclopentadienyl group bound in an $\eta^5$ bonded mode to M;
Z is a moiety comprising boron, or a member of Group 14 of the Periodic Table of the Elements and optionally sulfur or oxygen, said moiety having up to 20 non-hydrogen atoms, and optionally Cp* and Z together form a fused ring system;
X each occurrence is an anionic ligand group or neutral Lewis base ligand group having up to 30 non-hydrogen atoms;
n is 0, 1, 2, 3 or 4 depending on the valance of M; and
Y is an anionic or nonanionic ligand group bonded to Z and M comprising nitrogen, phosphorus, oxygen or sulfur and having up to 20 non-hydrogen atoms, and optionally Y and Z together form a fused ring system.

Illustrative but non-limiting examples of the compounds represented by the above formula are:

| Z | Cp* | Y | X | M |
|---|---|---|---|---|
| dimethylsilyl | cyclopentadienyl | t-butylamido | chloride | titanium |
| methylphenylsilyl | fluorenyl | phenylamido | methyl | zirconium |
| diphenylsilyl | indenyl | cyclohexylamido | | hafnium |
| tetramethylethylene | | oxo | | yttrium |
| ethylene | tetramethylcyclopentadienyl | | | |
| diphenylmethylene | | | | |

The aluminoxanes are well known in the art and comprise a poly(hydrocarbylaluminum oxide). They may be formed by reacting water with an alkylaluminum compound and comprise oligomeric linear and/or cyclic alkyl aluminoxanes represented by the formula:

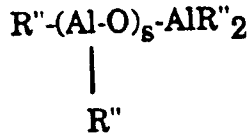

for oligomeric, linear aluminoxanes; and

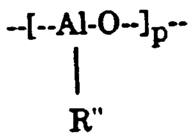

for oligomeric, cyclic aluminoxane; wherein
s is 1-40, preferably 10-20,
p is 3-40, preferably 3-20 and
R" is a $C_1$-$C_{12}$ alkyl group, preferably methyl and an aryl radical such as a substituted or unsubstituted phenyl or naphthyl radical.

Generally, in the preparation of aluminoxanes from, for example, aluminum trimethyl and water, a mixture of linear and cyclic compounds is obtained.

The aluminoxanes may be prepared in a variety of ways. For example, the aluminum alkyl may be treated with water in the form of a moist solvent. Alternatively, the aluminum alkyl, such as aluminum trimethyl may be contacted with a hydrated salt such as hydrated ferrous sulfate. This latter method comprises treating a dilute solution of aluminum trimethyl in, for example, toluene with a suspension of ferrous sulfate heptahydrate. It is also possible to form methylaluminoxanes by the reaction of a tetraalkyldialuminoxane containing $C_2$ or higher alkyl groups with trimethylaluminum using an amount of trimethylaluminum which is less than a stoichiometric excess. The synthesis of methylaluminoxanes may also be achieved by the reaction of a trialkylaluminum compound or a tetraalkyldialuminoxane containing $C_2$ or higher alkyl groups with water to form a polyalkyl aluminoxane which is then reacted with trimethylaluminum. Further, methylaluminoxanes, which are also known as modified aluminoxanes, may be synthesized by the reaction of a polyalkyl aluminoxane containing $C_2$ or higher alkyl groups with trimethylaluminum and then with water as disclosed in, for example, U.S. Patent No. 5,041,584.

The preferred metallocenes may be represented by the general formula:

$$(C_5R_x)_yR'_z(C_5R_m)MQ_{n-y-1}$$

wherein:
M is a metal of Groups IIIB to VIII of the Periodic Table of the Elements;
$(C_5R_x)$ and $(C_5R_m)$ are the same or different cyclopentadienyl or substituted cyclopentadienyl groups bonded to M;
R is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring;
R' is a $C_1$-$C_4$ substituted or unsubstituted alkylene radical, a dialkyl or diaryl germanium or silicon, or an alkyl or aryl phosphine or amine radical bridging two $(C_5R_x)$ and $(C_5R_m)$ rings;
Q is a hydrocarbyl radical such as aryl, alkyl, alkenyl, alkylaryl, or aryl alkyl radical having from 1-20 carbon atoms, hydrocarboxy radical having from 1-20 carbon atoms or halogen and can be the same or different from each other;
z is 0 or 1;
y is 0, 1 or 2;
z is 0 when y is 0;
n is 0, 1, 2, 3, or 4 depending upon the valence state of M;
and n - y is $\geqq$ 1.

The reaction products of the metallocene and aluminoxane which are generally solid materials when produced in aliphatic solvents and oils when produced in aromatic solvents can be recovered by any well known technique. For example, the solid material can be recovered from the liquid by vacuum filtration or decantation. The oils can be recovered by decantation, and when dried, become glassy solids. The recovered material is thereafter dried under a stream of pure dry nitrogen, dried under vacuum, or by any other convenient manner. The recovered solid is the catalytically active material.

The amount of aluminoxane and metallocene usefully employed in preparation of the catalytically active material can vary over a wide range. The mole ratio of aluminum atoms contained in the aluminoxane to metal atoms contained in the metallocene is generally in the range of from about 2:1 to about 100,000:1, preferably in the range of from about 10:1 to about 10,000:1, and more preferably in the range of from about 50:1 to about 2,000:1.

The polyolefins formed when using metallocene/aluminoxane catalyst systems may optionally contain dienes. Examples of suitable non-conjugated dienes are straight chain acyclic dienes such as 1,4-hexadiene, 1,5-hexadiene, 1,7-octadiene, 1,9-decadiene and 1,6-octadiene; branched chain acyclic dienes such as 5-methyl-1,4-hexadiene, 3,7-dimethyl-1,6-octadiene, 3,7-dimethyl-1,7-octadiene and mixed isomers of dihydromyrcene and dihydrocinene; single ring alicyclic dienes such as 1,3-cyclopentadiene, 1,4-cyclohexadiene, 1,5-cycloctadiene and 1,5-cyclododecadiene; and multi-ring alicyclic fused and bridged ring dienes such as tetrahydroindene, methyl tetrahydroindene, dicyclopentadiene, bicyclo-(2,2,1)-hepta-2,5-diene, alkenyl, alkylidene, cycloalkenyl and cycloalkylidene norbornenes such as 5-methylene-2-norbornene, 5-propenyl-2-norbornene, 5-isopropylidene-2-norbornene, 5-(4-cyclopentenyl)-2-norbornene, 5-cyclohexylidene-2-norbornene, 5-vinyl-2-norbornene and norbornadiene.

Conventional catalyst additives may be introduced into the reaction zone as part of the catalyst system, if so desired.

The Lewis Bases which are applicable for use in the present invention and which are capable of reducing the activity of the olefin polymerization reaction as desired, even to the point of substantially complete termination, which termination is fully reversible, include ethers, alcohols, ketones, aldehydes, carboxylic acids, esters, carbonates, phosphines, phosphine oxides, phosphates, phosphites, amines, amides, nitriles, alkoxy silanes, aluminum alkoxides, water, oxygen, nitric oxides, and the like.

The ethers include aliphatic ethers, cycloaliphatic ethers, aromatic ethers, monoethers, diethers, tetraethers, polyethers, and the like. Particularly useful ethers are aliphatic monoethers, and cycloaliphatic monoethers containing from 2 to 20 carbon atoms. Other particularly useful ethers are aliphatic diethers, and cycloaliphatic diethers containing from 3 to 20 carbon atoms. Still other particularly useful ethers are aromatic ethers, aliphatic triethers, and aliphatic tetraethers containing from 7 to 20 carbon atoms. Preferred ethers are dimethyl ether, diethyl ether, tetrahydrofuran, dioxane, 2,5,8,11,14-pentaoxopentadecane, methoxy benzene, and 1,2-dimethoxy ethane.

Particularly useful alcohols include aliphatic alcohols containing from 1 to 20 carbon atoms, glycols containing from 2 to 20 carbon atoms, aromatic alcohols and cycloaliphatic alcohols containing from 6 to 20 carbon atoms. Preferred alcohols are methyl alcohol, ethyl alcohol, 2-ethyl-1-hexanol, cyclohexanol, ethylene glycol, glycerine, phenol, and propylene glycol.

Particularly useful ketones are aliphatic monoketones, cycloaliphatic monoketones, and cycloaliphatic diketones containing from 3 to 20 carbon atoms. Other particularly useful ketones are aromatic ketones containing from 8 to 20 carbon atoms and aliphatic diketones containing from 5 to 20 carbon atoms. Preferred ketones are acetone, cyclohexanone, 1,4-cyclohexanedione, acetophenone, benzophenone, acetylacetone, and diethyl ketone.

Particularly useful aldehydes are aliphatic aldehydes containing from 2 to 20 carbon atoms and aromatic aldehydes containing from 7 to 20 carbon atoms. Preferred aldehydes are acetaldehyde and benzaldehyde.

Particularly useful esters are aliphatic monoesters, cycloaliphatic monoesters, and cycloaliphatic diesters containing from 3 to 20 carbon atoms. Other particularly useful esters are aromatic esters containing from 8 to 20 carbon atoms and aliphatic diesters containing from 5 to 20 carbon atoms. Preferred esters are methyl acetate, ethyl acetate, ε-caprolactone, methyl benzoate, diisobutylphthalate, and dimethyl malonate.

Particularly useful aldehydes are aliphatic aldehydes containing from 2 to 20 carbon atoms and aromatic aldehydes containing from 7 to 20 carbon atoms. Preferred aldehydes are acetaldehyde and benzaldehyde.

Particularly useful carboxylic acids are aliphatic carboxylic acids containing from 2 to 20 carbon atoms and aromatic carboxylic acids containing from 7 to 20 carbon atoms. Preferred carboxylic acids are acetic acid and benzoic acid.

Particularly useful carbonates are aliphatic and cycloaliphatic carbonates containing from 3 to 20 carbon atoms. Preferred carbonates are dimethyl carbonate, diethyl carbonate, and 1,3-dioxolan-2-one.

Particularly useful phosphines, phosphine oxides, phosphates, and phosphites contain aliphatic moieties with from 1 to 12 carbon atoms, aromatic moieties with from 6 to 12 carbon atoms, cycloaliphatic moieties with from 4 to 12 carbon atoms, and mixtures thereof. Preferred phosphines, phosphine oxides, phosphates, and phosphites are trimethyl phosphine, triisopropyl phosphine, triphenyl phosphine, tricyclohexyl phosphine, trimethyl phosphine oxide, triisopropyl phosphine oxide, triphenyl phosphine oxide, tricyclohexyl phosphine oxide, trimethyl phosphate, triisopropyl phosphate, triphenyl phosphate, tricyclohexyl phosphate, trimethyl phosphite, triisopropyl phosphite, triphenyl phosphite, and tricyclohexyl phosphite.

Particularly useful amines and amides contain hydrogen, aliphatic moieties with from 1 to 12 carbon atoms, aromatic moieties with from 6 to 12 carbon atoms, cycloaliphatic moieties with from 4 to 12 carbon atoms, and mixtures thereof. Preferred amines and amides are trimethyl amine, triisopropyl amine, triphenyl amine, tricyclohexyl amine, N, N-dimethyl analine, N-ethylacetamide, N, N-dimethylbenzamide, and acetanalide.

Particularly useful nitriles contain aliphatic moities with from 1 to 12 carbon atoms, aromatic moieties with from 6 to 12 carbon atoms, and cycloaliphatic moieties with from 4 to 12 carbon atoms. Preferred nitriles are acetonitrile and benzonitrile.

Particularly useful alkoxy silanes contain hydrogen, aliphatic moities with from 1 to 12 carbon atoms, aromatic moieties with from 6 to 12 carbon atoms, cycloaliphatic moieties with from 4 to 12 carbon atoms, and mixtures thereof. Preferred alkoxy silanes are phenyltrimethoxysilane, n-propyltrimethoxysilane, cyclohexyltrimethoxysilane, cyclohexyltriethoxysilane, diphenyldimethoxysilane, disobutyldimethoxysilane, di*t*-butyldimethoxysilane, and di*t*-butyldiethoxysilane.

Particularly useful aluminum alkoxides contain aliphatic moities with from 1 to 12 carbon atoms, aromatic moieties with from 6 to 12 carbon atoms, cycloaliphatic moieties with from 4 to 12 carbon atoms, and mixtures thereof. Preferred aluminum alkoxides are diethylaluminum ethoxide, diisobutylaluminum ethoxide, diisobutylaluminum isobutoxide, diphenylaluminum ethoxide, and dicyclohexylaluminum ethoxide.

The Lewis Base may be added to the polymerization reaction by a variety of methods, depending upon the polymerization process being used and the form of the Lewis Base. It may be added in the neat form or it may be added as a dilute solution. Depending upon the solubility of the Lewis Base, appropriate diluents may include the monomer or a hydrocarbon such as toluene or isopentane.

The amount of Lewis Base that is utilized to reduce the activity of the olefin polymerization reaction using a metallocene/aluminoxane catalyst system is strongly dependent upon a number of factors. Those factors include the specific Lewis Base being used, the specific metallocene compound that is present, the specific aluminoxane compound that is present, the reaction temperature, the molar ratio of aluminoxane to metallocene, the specific olefin(s) that is (are) present, and the concentration of the olefin used in the polymerization reaction. Generally, if a multifunctional Lewis Base is utilized to reduce the activity of the olefin polymerization, the extent of the reduction in polymerization activity will be greater than that observed with an equivalent amount of a monofunctional Lewis Base. The amount of Lewis Base required to reduce the activity of a polymerization reaction will be less if a low aluminoxane/metallocene ratio is utilized.

Generally, a molar ratio of multifunctional Lewis Base to metallocene in the range of from about 0.1 to about 10,000 when the aluminoxane/metallocene molar ratio is in the range of from about 2 to about 100,000 will reduce the activity of the catalyst system by about 10 to about 100%. In a preferred embodiment, the molar ratio of multifunctional Lewis Base to metallocene is in the range of from about 2 to about 1,000 when the aluminoxane/metallocene ratio is in the range of from about 50 to about 10,000, and will reduce the activity of the catalyst system by about 30 to about 100%.

Generally, a molar ratio of multifunctional Lewis Base to metallocene in the range of from about 10 to about 1000 when the aluminoxane/metallocene ratio is in the range of from about 1000 to about 100000 will reduce the activity of the catalyst system by about 10 to about 100%. In a preferred embodiment, the molar ratio of multifunctional Lewis Base to metallocene is in the range of from about 100 to about 1000 when the aluminoxane/metallocene ratio is in the range of from about 1000 to about 10000, and will reduce the activity of the catalyst system by about 30 to about 100%.

When using the Lewis Base to additionally act as a static driver, the amount of Lewis Base utilized is typically less than that which would be used to terminate the reaction. Generally, the Lewis Base must be chosen such that it generates charge which is opposite of that which is present in the reactor.

The functional groups that may be present on the Lewis Base which drive the static charge toward positive values include alcohols containing up to about 7 carbon atoms, oxygen and nitric oxide. The functional groups that may be present on the Lewis Base which drive the static charge toward negative values include ketones containing up to about 7 carbon atoms preferably acetone and methylisobutyl ketone.

An important advantage of the present invention is the ability to effectively and economically reverse the reduction in activity caused by the introduction of the Lewis Base, even if the reduction in activity results in the substantial termination of the reaction. In particular, after the addition of the Lewis Base to either reduce the activity of the aluminoxane/metallocene catalyst system or to substantially terminate the olefin polymerization reaction using such a catalyst system, the introduction of additional aluminoxane to the reaction site completely reverses the reduction in activity brought about by the Lewis Base, even if such activity was substantially terminated. Indeed, in some instances, the activity of the reaction after reinitiation is even higher than the activity of the reaction prior to being terminated by the addition of the Lewis Base.

The amount of additional aluminoxane needed to be introduced into the reaction site so as to reverse the reduction or termination in activity of the metallocene is dependent upon the amount of Lewis Base that was

added to control the activity of the metallocene, the specific Lewis Base that was added, as well as the initial ratio of aluminoxane to metallocene that was present during the polymerization reaction. Typically, the amount of additional aluminoxane that is added to reverse the reduction or termination in activity must be at least a 50% increase in the original molar ratio of the aluminoxane to metallocene and preferably is at least 100% of the original molar ratio of aluminoxane to metallocene Thus, if there were originally 300 moles of aluminoxane per mole of metallocene prior to the substantial termination of the reaction, it would take at least an additional 150 moles of aluminoxane to be added to the substantially terminated reaction in order to restart it. The factors which determine the amount of aluminoxane needed for restarting the reaction include the original aluminoxane/metallocene ratio as well as the ratio of Lewis Base kill agent to that of metallocene present in the catalyst system.

The gas phase olefin polymerization reaction systems in which the present invention is useful comprise a reactor vessel to which olefin monomer and catalyst components can be added and which contain a bed of forming polyolefin particles. The present invention is not limited to any specific type of gas phase reaction system. In very general terms, a conventional fluidized bed process for producing resins is conducted by passing a gaseous stream containing one or more monomers continuously through a fluidized bed reactor under reactive conditions and in the presence of catalyst at a velocity sufficient to maintain the bed of solid particles in a suspended condition. The gaseous stream containing unreacted gaseous monomer is withdrawn from the reactor continuously, compressed, cooled and recycled into the reactor. Product is withdrawn from the reactor and make-up monomer is added to the recycle stream. Standard operating conditions may be utilized in the gas phase reactor system when using Lewis Base additives to control or substantially terminate reaction activity.

One of the liquid phase olefin polymerization reaction systems in which the present invention is useful is described in U.S. Patent 3,324,095. The liquid phase olefin polymerization reaction systems generally comprise a reactor vessel to which olefin monomer and catalyst components can be added and which contains liquid reaction medium for dissolving or suspending the polyolefin. The liquid medium may consist of the bulk liquid monomer or an inert liquid hydrocarbon which is non-reactive under the polymerization conditions employed. While the hydrocarbon selected need not function as solvent for the catalyst or the polymers obtained by the process, it usually serves as solvent for the monomers employed in the polymerization. Among the inert hydrocarbon liquids suitable for this purpose may be mentioned isopentane, hexane, cyclohexane, heptane, benzene, toluene, and the like. The present invention is not limited to any specific type of solution, slurry, or bulk liquid monomer reaction system. In very general terms, a conventional liquid phase olefin process for producing resins is conducted by continuously adding one or more monomers to a reactor under reactive conditions in the presence of catalyst at a concentration sufficient to maintain the reaction medium in a fluid state. The reactive contact between the olefin monomer and the catalyst should be maintained by constant stirring or agitation of the reaction mixture. The reaction medium containing the polyolefin product and unreacted gaseous monomer is withdrawn from the reactor continuously. The polyolefin product is separated, then the unreacted monomer and liquid reaction medium are recycled into the reactor. Standard operating conditions may be utilized in the liquid phase reactor system when using Lewis Base additives to control or substantially terminate reaction activity.

## EXAMPLES

Synthesis of diphenylmethylene(cyclopentadienyl) (9-fluorenyl)zirconium dichloride.

A. (Cyclopentadienyl)(9-fluorenyl)diphenylmethane.

A solution of n-butyl lithium in hexanes (75 ml, 187.5 mmol) was added dropwise under nitrogen to a stirred solution of 30.45 g (183 mmol) fluorene in 225 ml tetrahydrofuran (THF) held at room temperature by immersion in a cold water bath. The resulting deep red mixture was stirred for 1.5 hr.

To this fluorenyl anion solution was added via addition funnel a solution of 42.76 g (186 mmol) diphenylfulvene in 200 ml THF. The mixture was stirred for 40 hr at room temperature.

The reaction mixture was quenched by careful addition of 300 ml saturated aqueous ammonium chloride. The organic fraction was collected, combined with ether washings of the aqueous fraction, and stripped of most of the solvent on a rotary evaporator, leaving an orange slurry. 250 ml diethyl ether were added to this slurry and the mixture was filtered and the solid washed with additional ether. The solid was dried in vacuo overnight, yielding 31.09 g (cyclopentadienyl)(9-fluorenyl)diphenylmethane (43%).

B. Dilithio(cyclopentadienyl)(9-fluorenyl)diphenylmethane.

A solution of methyl lithium in diethyl ether (115 ml, 161 mmol) was added dropwise to 30.98 g (78 mmol) (cyclopentadienyl)(9-fluorenyl)diphenylmethane slurried in ca. 500 ml THF held at 0°C. Following the addition, the solution was allowed to warm to room temperature. After 2 hr, most of the solvents were removed from the blood-red solution in vacuo and 400 ml hexane were stirred with the red slurry overnight. The brown solid was collected on a filter and dried for 3 hr in vacuo. 38.99 g dilithio(cyclopentadienyl)(9-fluorenyl)diphenylmethane bis(tetrahydrofuran), 90%, were obtained.

C. Diphenylmethylene(cyclopentadienyl)(9-fluorenyl)zirconium dichloride.

To a slurry of 38.99 g (71 mmol) dilithio(cyclopentadienyl)(9-fluorenyl)diphenylmethane bis(tetrahydrofuran) in 250 ml hexane was slowly added 16.6 g (71 mmol) solid zirconium tetrachloride under argon. The slurry was stirred at room temperature overnight. The resulting slurry was centrifuged to settle the solids. The supernatant was removed by cannula and discarded, while the solid residues were dried in vacuo for 3.25 hr. The result was a mixture of diphenylmethylene(cyclopentadienyl)(9-fluorenyl)zirconium dichloride and lithium chloride, 45.57 g (100%). The abbreviation for this catalyst is DPZ.

DEFINITIONS:

MMAO in heptane- Solution of Akzo Modified Methyl Aluminoxane Type 3A in heptane 6.2% aluminum by weight MMAO in propane- Solution of Akzo Modified Methyl Aluminoxane Type 3A in propane 2.5% aluminum by weight

Example 1

In a nitrogen filled dry box, a 0.4777 g (1.89 μmol Zr) aliquot of an orange solution containing 0.0104 g DPZ in 4.0925 g distilled methylene chloride was added to 0.2233 g (510 μmol Al, 270 Al/Zr ratio) of a solution of MMAO in heptane. The resulting purple solution was stirred for 5 minutes, then transferred to a Precision Sampling Corp. Pressure-Lok® syringe. 500 ml of hexane and 20 ml 1-hexene were added to a one liter autoclave which had been dried by heating at a temperature of greater than 96°C under a stream of nitrogen, then cooled to 60°C. The reactor was heated with stirring to the desired polymerization temperature of 85°C, then pressurized with 40 psia of hydrogen and 100 psia of ethylene to a total pressure of 150 psig. The flow of ethylene to the reactor was suspended, the reactor was cooled by 5°C to 80°C, the catalyst solution was added to the reactor via syringe, then ethylene was continually added to the reactor to maintain a constant pressure of 150 psig. The reaction temperature was maintained at 85°C for 12 minutes, then 0.1 ml of a kill agent consisting of a 1.0 molar solution (100 μmol, 53 killer/Zr ratio, 5.1 Al/killer ratio) of dimethyl ether in hexane was added to the reactor via syringe. The reaction exotherm disappeared and ethylene consumption decreased to 8% of the level before the kill, i.e., the activity of the catalyst was reduced by 92%. After 15 minutes, the reactor temperature was stabilized at 85°C and the polymerization reaction was reinitiated by the addition of 0.5 ml (1200 μmol Al) MMAO in heptane via syringe. A reaction exotherm reappeared, after 13 minutes the temperature was stabilized at 85°C, and the catalyst activity as measured by ethylene consumption was approximately 75% of the activity present before the addition of the kill agent. An additional 0.5 ml (2400 μmol Al cumulative) of MMAO in heptane was added, after 11 minutes the temperature was stabilized, and the catalyst activity was approximately 100% of the activity present before the addition of the kill agent. An additional 0.5 ml (3600 μmol Al cumulative) of MMAO in heptane was added, after 9 minutes the temperature was stabilized, and the catalyst activity had decayed to approximately 80% of the activity present before the addition of the kill agent. An additional 0.5 ml (4800 μmol Al cumulative) of MMAO in heptane was added, after 5 minutes the temperature was stabilized, and the catalyst activity was approximately 60% of the activity present before the addition of the kill agent. The polymerization was performed for a total of 70 minutes and 57.4 g of polymer was recovered for a catalyst productivity of 30300 g/mmol Zr. The polymerization profile for the entire reaction is shown in Figure 1.

Examples 2-27

The hexane slurry polymerization procedure of Example 1 was followed using the conditions listed in Table I.

## Table I

| | | Reactants | | | Reaction Conditions | | Relative Activity (%) Compared to Before Kill (cumulative amounts) | | | | | Final Product | | |
|---|---|---|---|---|---|---|---|---|---|---|---|---|---|---|
| Example | Kill Agent | Kill Agent (µmol) | DPZ (µmol) | Initial Al/Zr | 1-Hexene (ml) | Temp (°C) | Right After Kill | 1200 µmol Al | 2400 µmol Al | 3600 µmol Al | 4800 µmol Al | Yield (g) | Productivity (g/mmol Zr) | Melt Index (dg/min) |
| 1 | Diethyl ether | 100 | 1.89 | 270 | 20 | 85 | 8 | 75 | 100 | 80 | 60 | 57.4 | 30300 | 3.2 |
| 2 | 2,5,8,11,14-Pentaoxopentadecane | 5 | 1.81 | 290 | 20 | 85 | 29 | 37 | 79 | 110 | 95 | 50.1 | 27700 | - |
| 3 | 1,2-Dimethoxyethane | 10 | 1.82 | 290 | 20 | 85 | 12 | 20 | 36 | 69 | 96 | 35.8 | 19700 | - |
| 4 | 1,2-Dimethoxyethane | 10 | 1.83 | 290 | 20 | 105 | 18 | 55 | 142 | 173 | 193 | 47.2 | 25800 | - |
| 5 | 1,2-Dimethoxyethane | 10 | 1.92 | 270 | 0 | 105 | 14 | 46 | 96 | 135 | 105 | 43.9 | 22900 | 0.5 |
| 6 | 2,5,8,11,14-Pentaoxopentadecane | 10 | 0.66 | 4700 | 20 | 85 | 20 | 22 | 24 | 26 | 31 | 44.3 | 66900 | - |
| 7 | 1,2-Dimethoxyethane | 10 | 0.63 | 5000 | 20 | 85 | 27 | 29 | 36 | 35 | 33 | 44.9 | 71000 | - |
| 8 | 1,2-Dimethoxyethane | 20 | 1.86 | 290 | 20 | 105 | 20 | 20 | 41 | 63 | 98 | 45.7 | 24600 | - |
| 9 | 1,2-Dimethoxyethane | 20 | 1.82 | 290 | 20 | 85 | 11 | 14 | 26 | 42 | 67 | 22.2 | 12200 | - |
| 10 | 2,5,8,11,14-Pentaoxopentadecane | 40 | 1.82 | 280 | 20 | 85 | 11 | 11 | 17 | 22 | 37 | 23.8 | 13100 | - |
| 11 | Tetrahydrofuran | 100 | 1.95 | 264 | 20 | 85 | 0 | 25 | 133 | 233 | 233 | 39.6 | 20300 | 4.4 |
| 12 | 1,2-Dimethoxyethane | 100 | 1.91 | 280 | 20 | 85 | 9 | 8 | 8 | 9 | 12 | 22.8 | 11900 | - |
| 13 | 1,2-Dimethoxybenzene | 100 | 1.85 | 280 | 20 | 85 | 10 | 11 | 15 | 24 | 38 | 23.0 | 12400 | 0.3 |
| 14 | Acetone | 100 | 1.86 | 280 | 20 | 85 | 10 | 28 | 62 | 80 | 55 | 43.7 | 23500 | - |
| 15 | Ethyl acetate | 100 | 1.86 | 290 | 20 | 85 | 9 | 10 | 67 | 106 | 92 | 45.2 | 24300 | 0.7 |
| 16 | Tributylphosphine oxide | 100 | 1.85 | 280 | 20 | 85 | 10 | 9 | 9 | 10 | 18 | 21.2 | 11400 | - |
| 17 | Diethyl carbonate | 100 | 1.83 | 290 | 20 | 85 | 9 | 9 | 16 | 53 | 92 | 27.7 | 15100 | - |
| 18 | n-Propyltrimethoxysilane | 100 | 1.81 | 290 | 20 | 85 | 13 | 18 | 69 | 75 | 67 | 44.8 | 24700 | - |
| 19 | Tetrahydrofuran | 100 | 1.53 | 911 | 20 | 85 | 12 | 40 | 53 | 67 | 73 | 57.6 | 37601 | 6.4 |
| 20 | Oxygen | 100 | 1.00 | 280 | 20 | 85 | 25 | 40 | 90 | 150 | 225 | 11.3 | 11300 | - |
| 21 | Diethyl ether | 100 | 0.99 | 280 | 20 | 85 | 18 | 55 | 155 | 182 | 169 | 38.5 | 38900 | - |
| 22 | Methanol | 100 | 0.97 | 290 | 20 | 85 | 11 | 43 | 69 | 85 | 97 | 32.5 | 33500 | 1.4 |
| 23 | Acetone | 100 | 0.96 | 290 | 20 | 85 | 28 | 111 | 222 | 306 | 333 | 30.3 | 31500 | 0.5 |
| 24 | 1,2-Dimethoxybenzene | 100 | 0.70 | 4500 | 20 | 85 | 11 | - | - | - | 22 | 36.3 | 51600 | - |
| 25 | Methanol | 200 | 1.80 | 280 | 20 | 85 | 11 | 11 | 32 | 58 | 68 | 40.5 | 22500 | 0.9 |
| 26 | Tetrahydrofuran | 200 | 1.53 | 950 | 20 | 85 | 14 | - | - | - | 14 | 22.7 | 14800 | 4.3 |
| 27 | Tetrahydrofuran | 500 | 1.60 | 5000 | 20 | 105 | 5 | 7 | 9 | 14 | 19 | 40.6 | 64200 | 4.2 |

Example 28

A gas phase ethylene polymerization with DPZ was killed with tetrahydrofuran and the kill was reversed by adding MMAO. The polymerization was performed in a horizontally mixed reactor according to the following procedure. Figure 2 depicts the horizontally mixed reactor system. This reactor 10 is a two-phase (gas/solid) stirred bed, back mixed reactor. A set of four "plows" 12 mounted horizontally on a central shaft rotate at 190 rpm to keep the particles in the reactor mechanically fluidized. The cylinder 14 swept by these plows measures 40.6 cm long by 39.7 cm in diameter, resulting in a mechanically fluidizable volume of 46 liters. The gas volume, larger than the mechanically fluidizable volume due to the vertical cylindrical chamber 16, totals 54.6 liters. A disengager vessel 18 is mounted atop vertical cylinder 16 on the horizontally mixed reactor. This vessel has a gas volume of 68 liters, more than doubling the gas volume of the reactor. Gas is continually recirculated through both the reactor and disengager via a blower 20, so that the gas composition is homogeneous throughout. The reactor is cooled by an external jacket of chilled glycol (not shown). The bed temperature is measured with an RTD temperature probe 22 in a thermowell protruding into the bed at a 60° angle below horizontal, between the inner set of plows.

Static levels in the bed are measured with a Union Carbide Corp. static probe calibrated for measurement in the (-1500, +1500 volt) range, sensitive to changes in static of 30 volts or more. The probe is mounted through a port in the reactor 60° below vertical, protruding about 5 cm into the bed between the inner set of plows (not shown).

Monomer feed was passed into the reactor via inlet 24 and comonomer feed via inlet 26. The comonomer was passed through a vaporizer 28 to vaporize the comonomer.

Catalyst and co-catalyst were fed via inlets 30 and 32, respectively, and after being mixed at junction 34 were passed through a precontact coil 36 from which the mixture was then passed to the injection assembly 38 where nitrogen from inlet 40 was provided to be-mixed with the catalyst mixture for introduction into the reactor.

The reactor was charged with a 1.4 kg bed of 1 melt index 0.92 density ethylene/1-butene copolymer, dried by heating at a temperature of greater than 90°C under a stream of nitrogen, cooled to 75°C, and charged with ethylene, 1-hexene, and hydrogen. A small vent 42 of the reactor gases was maintained via computer adjustment to achieve a constant total pressure of 350 psig. The feeds were adjusted until the desired gas composition consisting of 120 psia ethylene, 0.013 $H_2/C_2H_4$, and 0.0045 $C_6H_{12}/C_2H_4$ was reached. Gas composition was measured at 6 minute intervals by a gas chromatograph analyzer (not shown). An initial charge of MMAO (46 mmol Al) cocatalyst was added prior to starting catalyst feeding in order to scavenge any poisons present in the reactor.

A 7.0 millimolar solution of DPZ catalyst in methylene chloride was pumped into a continuous stream of MMAO in propane (2.5 wt% Al) cocatalyst solution to achieve a 1000 Al/Zr ratio. The MMAO feed rate was maintained at a rate of 400 ml/hr in proportion to the DPZ feed rate of approximately 31 ml/hr. This mixture was fed through precontact coil 36 of 1/8" tubing where the components reacted for 5 minutes. Upon leaving this precontact coil, the mixed solution feed was sprayed into the reactor by a constant flow of 180 l/hr of nitrogen through a nozzle of injection assembly 38 above the agitated bed of polymer. The monomers were added to the reactor in quantities sufficient to maintain gas concentrations and ratios. After approximately 3.5 hours, 0.67 mmol DPZ and 536 additional mmol Al had been fed to the reactor and the polymer production rate had increased to 3.6 kg/hr, at which point the DPZ and MMAO feeds were stopped and a solution of 1.2 ml (15 mmol) tetrahydrofuran in 200 ml isopentane was pressurized into the reactor. The reaction exotherm disappeared, causing the reactor temperature to fall to 60°C, and ethylene was not being consumed by the catalyst. After 1.6 hours the reactor temperature was stabilized at 75°C, the MMAO feed was resumed, and the polymer production rate steadily increased as the MMAO inventory in the reactor increased. After 1.5 hours, 200 mmol additional Al had been added to the reactor and the catalyst ethylene consumption was 1.8 kg/hr or approximately 50% of the rate before the kill. The polymerization was then terminated by quickly venting the reactor, cooling to ambient temperature, and purging monomers from the resin with nitrogen. A total of 10.3 kg of granular resin product was then discharged from the reactor. The product had a 5.0 dg/min melt index, 0.934 g/ml density, 0.89 mm average particle size, and 0.40 g/ml settled bulk density.

## Claims

1. A method for reversibly controlling the activity of an olefin polymerization reaction which uses the reaction product of a metallocene compound and aluminoxane as an olefin polymerization catalyst comprising the addition of a Lewis Base containing an available pair of electrons capable of forming a dative bond to both

the metallocene and the aluminoxane.

2. A method as claimed in Claim 1, wherein the Lewis Base is selected from the group consisting of ethers, alcohols, ketones, aldehydes, carboxylic acids, esters, carbonates, phosphines, phosphine oxides, phosphates, phosphites, amines amides, nitriles, alkoxy silanes, aluminum alkoxides, water, nitric oxides and combinations thereof.

3. A method as claimed in Claim 1 or Claim 2, wherein the amount of Lewis Base added to reduce the activity of the reaction by an amount of from 30 to 100% is in a molar ratio of from 0.1 to 10,000 based on the amount of metallocene present when the aluminoxane/metallocene molar ratio is in the range of from 2 to 100,000.

4. A method for reversibly terminating an olefin polymerization reaction which uses the reaction product of a metallocene compound and aluminoxane as an olefin polymerization catalyst comprising the addition of a Lewis Base containing an available pair of electrons capable of forming a dative bond to both the metallocene and the aluminoxane in an amount effective to substantially terminate the reaction.

5. A method as claimed in Claim 4, wherein the Lewis Base is selected from the group consisting of ethers, alcohols, ketones, aldehydes, carboxylic acids, esters, carbonates, phosphines, phosphine oxides, phosphates, phosphites, amines amides, nitriles, alkoxy silanes, aluminum alkoxides, water, nitric oxides and combinations thereof.

6. A method as claimed in Claim 4 or Claim 5, wherein the amount of Lewis Base added to reduce the activity of the reaction by an amount of from 30 to 100% is in a molar ratio of from 0.1 to 10,000 based on the amount of metallocene present when the aluminoxane/metallocene molar ratio is in the range of from 2 to 10,000.

7. A method for terminating and restarting an olefin polymerization reaction which uses the reaction product of a metallocene compound and aluminoxane as an olefin polymerization catalyst comprising:
(a) adding a Lewis Base containing an available pair of electrons capable of forming a dative bond to both the metallocene and the aluminoxane in an amount effective to substantially terminate the reaction; and
(b) introducing an amount of aluminoxane into the reaction zone sufficient to restart the polymerization reaction.

8. A method as claimed in Claim 7, wherein the Lewis Base is selected from the group consisting of ethers, alcohols, ketones, aldehydes, carboxylic acids, esters, carbonates, phosphines, phosphine oxides, phosphates, phosphites, amines amides, nitriles, alkoxy silanes, aluminum alkoxides, water, nitric oxides and combinations thereof.

9. A method as claimed in Claim 7 or Claim 8, wherein the amount of Lewis Base added to reduce the activity of the reaction by an amount of from 30 to 100% is in a molar ratio of from 0.1 to 10,000 based on the amount of metallocene present when the aluminoxane/metallocene molar ratio is in the range of from 2 to 10,000.

10. A method as claimed in any one of Claims 7 to 9, wherein the amount of aluminoxane needed to restart the reaction is at least 50% of the amount of aluminoxane originally present during the reaction.

FIG. 1

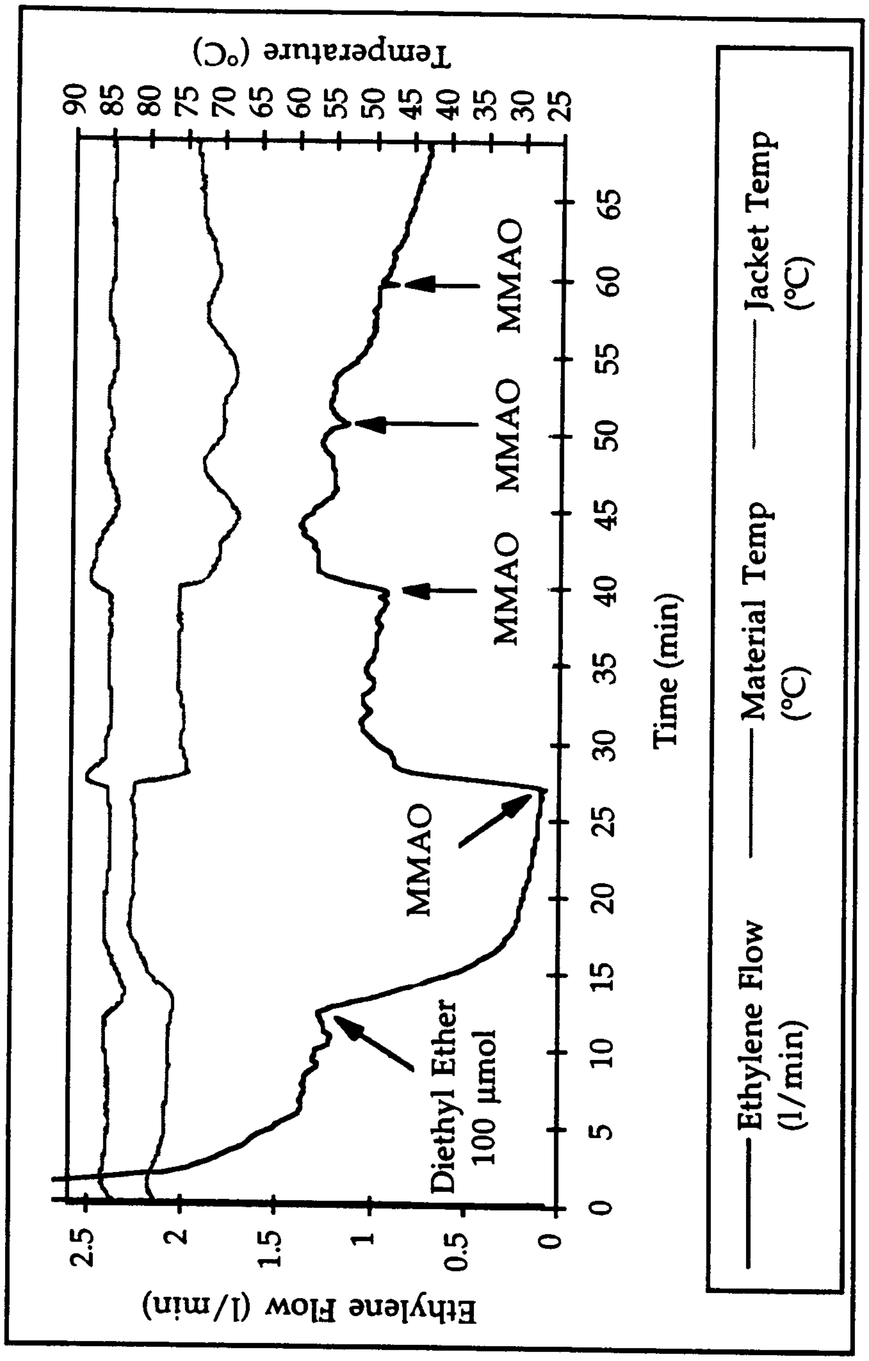
Temperature (°C)
90
85
80
75
70
65
60
55
50
45
40
35
30
25
Ethylene Flow (l/min)
2.5
2
1.5
1
0.5
0
0
5
10
15
20
25
30
35
40
45
50
55
60
65
Time (min)
Diethyl Ether
100 µmol
MMAO
MMAO
MMAO
MMAO
Ethylene Flow
(l/min)
Material Temp
(°C)
Jacket Temp
(°C)

FIG. 2

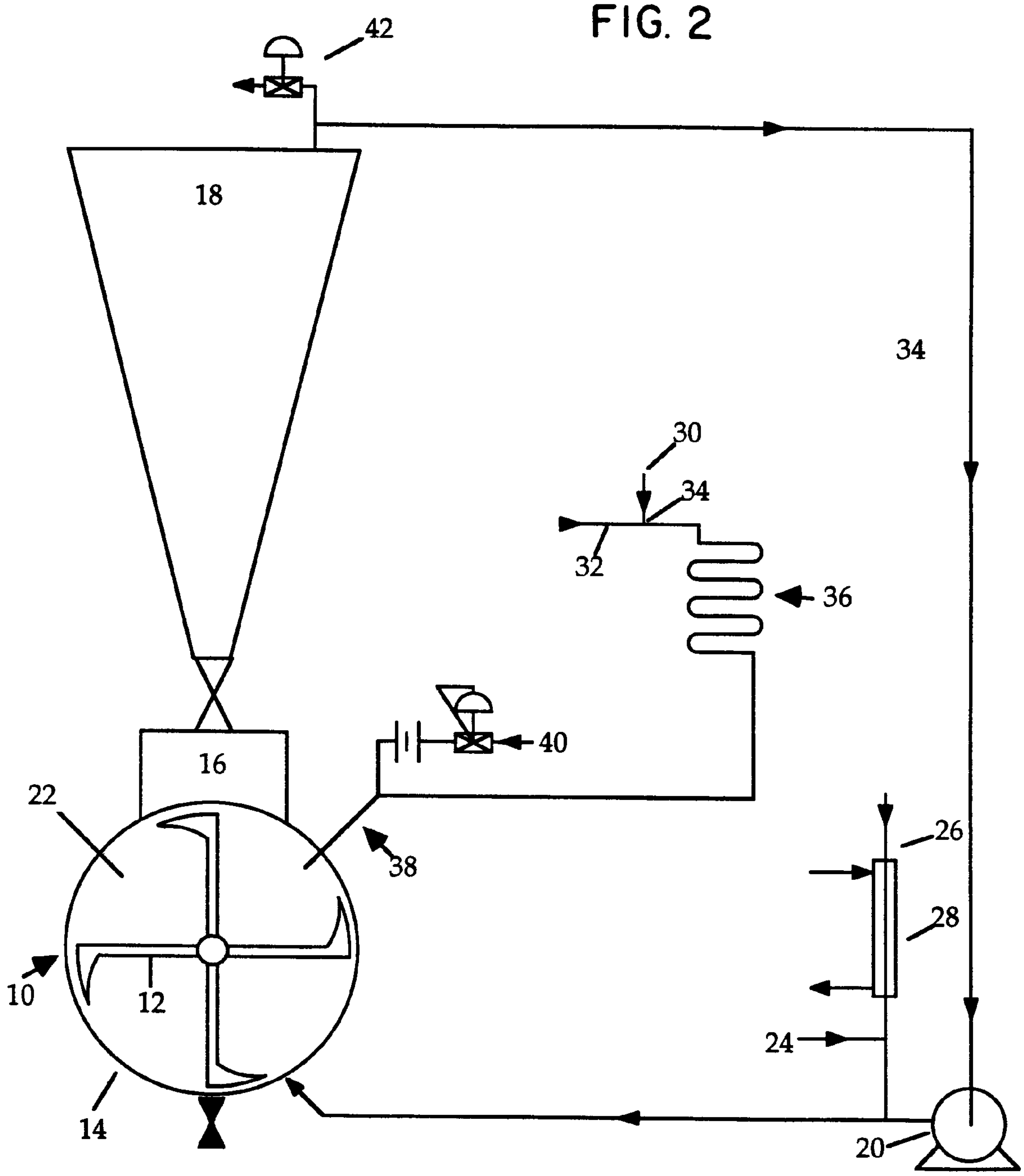

European Patent Office

# EUROPEAN SEARCH REPORT

Application Number
EP 94 30 4654

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DE-A-41 30 352 (BASF AG)<br>* claims 1-3 *<br>----- | 1-10 | C08F2/40<br>C08F10/00<br>C08F4/60 |
| | | | **TECHNICAL FIELDS SEARCHED (Int.Cl.5)** |
| | | | C08F |

The present search report has been drawn up for all claims

| Place of search | Date of completion of the search | Examiner |
|---|---|---|
| THE HAGUE | 12 October 1994 | Serravalle, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)